# EUROPEAN PATENT APPLICATION

(11) **EP 4 542 411 A1**
(43) Date of publication of application: **23.04.2025**
(21) Application number: 23826215.8
(22) Date of filing: 13.06.2023
(51) Int. Cl.: G06F 16/22

(54) **DATA STORAGE METHOD, DATA READING METHOD, DATABASE SYSTEM, AND DEVICE AND MEDIUM**

(30) Priority: 20.06.2022 CN 202210699463
(71) Applicant: ZTE Corporation, Shenzhen, Guangdong 518057 (CN)
(72) Inventor: HAN, Yinjun, Shenzhen, Guangdong 518057 (CN); TU, Yaofeng, Shenzhen, Guangdong 518057 (CN); GAO, Hong, Shenzhen, Guangdong 518057 (CN); CHEN, Zhenghua, Shenzhen, Guangdong 518057 (CN); JIN, Hao, Shenzhen, Guangdong 518057 (CN); LONG, Shizhang, Shenzhen, Guangdong 518057 (CN)
(74) Representative: Ziebig Hengelhaupt Intellectual Property Attorneys Patentanwaltskanzlei PartGmbB
(86) International application number: PCT/CN2023/099958
(87) International publication number: WO 2023/246566

(57) **Abstract**

Provided in the embodiments of the present application are a data storage method, a data reading method, a database system, and a device and a medium. The data storage method comprises: acquiring index information, writing the index information into a memory and a disk, wherein the disk stores the index information in a layered manner according to the sequence of writing time; and when the number of pieces of index information in the memory or a storage layer exceeds a threshold value, merging index information in the current storage layer and index information in the next storage layer, so as to obtain merged index information, synchronously establishing a learning index model corresponding to the merged index information, and replacing the index information in the next storage layer by means of the merged index information.

## Description

### CROSS-REFERENCE TO RELATED APPLICATIONS

The present application is proposed based on and claims priority to the Chinese patent application No. 202210699463.6, filed on June 20, 2022, the entire content of which is incorporated herein by reference.

### TECHNICAL FIELD

Embodiments of the present application relate to, but not limited to, the field of data storage, in particular to a data storage method, a data reading method, a database system, a device, and a medium.

### BACKGROUND

Current database systems use disks for persistent storage of storage data. With the maturity of artificial intelligence technology, machine learning is applied to index construction of database systems by index learning technology, which can reduce the number of I/O accesses of a disk and facilitates rapid finding of storage data in the disk. However, index learning at present has limitations: on the one hand, objects are required to be ordered during model training; and on the other hand, a model is trained based on existing index information distribution rules, and is not applicable to newly inserted index information, and the index information is required to be re-trained and learned, which is not friendly to the insertion of index information.

### SUMMARY

The following is an overview of the subject matter described in detail herein, which is not intended to limit the scope of protection of the claims.

Embodiments of the present application provide a data storage method, a data reading method, a database system, a device, and a medium.

In a first aspect, an embodiment of the present application provides a data storage method, applied to a database system. The database system includes a memory and a disk, the disk includes an index storage area, the index storage area stores index information, the index storage area includes at least two storage layers, and the index information in the index storage area is stored in a layered manner according to a sequence of writing time. The data storage method includes: acquiring, when storage data is written into the disk, index information corresponding to the storage data; writing the index information corresponding to the storage data into the memory and a first storage layer, the first storage layer being a storage layer storing index information with the earliest writing time; merging, in the case where the quantity of index information in the memory exceeds a first information quantity threshold, the index information in the memory with the index information in the first storage layer to obtain first merged index information, synchronously establishing a learning index model corresponding to the first merged index information in a merging process, and replacing the index information in the first storage layer with the first merged index information; and merging, in the case where the quantity of index information in a current storage layer exceeds a second information quantity threshold, the index information in the current storage layer with index information in a next storage layer to obtain second merged index information, synchronously establishing a learning index model corresponding to the second merged index information in a merging process, and replacing the index information in the next storage layer with the second merged index information.

In a second aspect, an embodiment of the present application further provides a data reading method, applied to a database system. The database system includes a memory and a disk, the disk includes an index storage area, the memory and the index storage area store index information, the index information includes keyword information of storage data and location information of the storage data, the index storage area includes at least two storage layers, and the index information in the index storage area is stored in a layered manner according to a sequence of writing time; and a database stores the storage data in accordance with the data storage method described above. The data reading method includes: acquiring target keyword information, the target keyword information being keyword information of storage data to be read; obtaining, when there is index information corresponding to the target keyword information in the memory, target location information based on the index information corresponding to the target keyword information in the memory, or obtaining, when there is index information corresponding to the target keyword information in the index storage area, target location information by means of a learning index model based on the index information corresponding to the target keyword information in the index storage area, the target location information being location information of the storage data to be read; and reading the storage data from the disk based on the target location information.

In a third aspect, an embodiment of the present application further provides a database system. The database system includes a memory and a disk, the disk includes an index storage area, the index storage area stores index information, the index storage area includes at least two storage layers, and the index information in the index storage area is stored in a layered manner according to a sequence of writing time; a database stores storage data in accordance with the data storage method described above; and the database reads storage data in accordance with the data reading method described above.

In a fourth aspect, an embodiment of the present application further provides an electronic device. The electronic device includes: a storage, a processor and a computer program stored on the storage and able to run on the processor, and the processor, when executing the computer program, implements the data storage method or the data reading method described above.

In a fifth aspect, an embodiment of the present application further provides a computer-readable storage medium storing computer-executable instructions, and the computer-executable instructions are used to execute the data storage method or the data reading method described above.

### BRIEF DESCRIPTION OF DRAWINGS

Accompanying drawings, which are intended to provide a further understanding of the technical solutions of the present application and form a part of the specification, serve to explain the technical solutions of the present application together with the embodiments of the present application, and do not form a limitation on the technical solutions of the present application.
FIG. 1 is a structural diagram of a database system according to an embodiment of the present application;
FIG. 2 is a flow diagram of a data storage method according to an embodiment of the present application;
FIG. 3 is a specific flow diagram of merging index information in a memory with index information in a first storage layer and establishing a learning index model;
FIG. 4 is a specific flow diagram of merging index information in a first storage layer with index information in a second storage layer and establishing a learning index model;
FIG. 5 is a specific flow diagram of merging index information in a current second storage layer with index information in the next second storage layer and establishing a learning index model;
FIG. 6 is a flow diagram of a data reading method according to an embodiment of the present application;
FIG. 7 is a specific flow diagram of obtaining target location information by means of a learning index model based on index information; and
FIG. 8 is a structural diagram of an electronic device according to an embodiment of the present application.

### DETAILED DESCRIPTION

In order to make the objectives, technical solutions and advantages of the present application clearer, the present application is further described in detail below with reference to accompanying drawings and embodiments. It is to be understood that the specific embodiments described herein are merely illustrative of the present application and are not intended to limit the present application.

It is to be noted that although a division of functional modules is made in a schematic diagram of a device, and a logical sequence is shown in a flowchart, in some cases, steps shown or described may be performed in a sequence different from the division of modules in the device, or in the flowchart. Terms "first", "second", and the like in the specification, the claims or the above-mentioned drawings are used to distinguish similar objects and not necessarily for describing a particular sequence or chronological order.

The present application provides a data storage method, a data reading method, a database system, a device and a medium. The data storage method includes: when storage data is written to a disk, index information corresponding to the storage data is acquired; the index information is written to a memory and the disk, the disk storing the index information in a layered manner according to a sequence of writing time; in the case where the quantity of index information in the memory exceeds a first information quantity threshold, the index information in the memory is merged with index information in a first storage layer of an index storage area of the disk to obtain first merged index information, a learning index model corresponding to the first merged index information is established synchronously in a merging process, and the index information in the first storage layer is replaced with the first merged index information; and in the case where the quantity of index information in a current storage layer exceeds a second information quantity threshold, the index information in the current storage layer is merged with index information in the next storage layer to obtain second merged index information, a learning index model corresponding to the second merged index information is established synchronously in a merging process, and the index information in the next storage layer is replaced with the second merged index information. By means of storing index data in ordered layers according to the degree of hot and cold of the data and establishing the learning index model while the index data is merged, the problems that a database system adopting a learning index requires index information to be ordered and is not friendly to the insertion of index information are effectively solved.

The embodiment of the present application is further illustrated below in conjunction with the accompanying drawings.

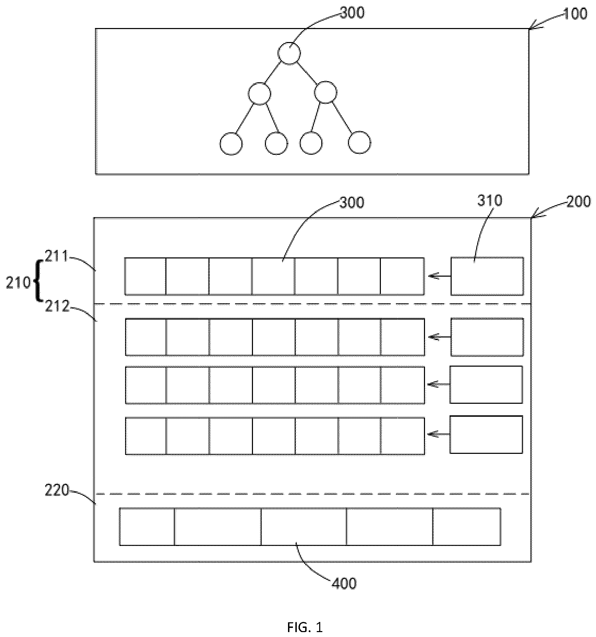

A database system is a computer software system that stores and manages data according to a data structure, and is a set of a large quantity of data that are organized, shareable and uniformly managed. Referring to FIG. 1, FIG. 1 is a structural diagram of a database system. The database system according to the embodiment of the present application includes a memory 100 and a disk 200. The disk 200 includes an index storage area 210 and a data storage area 220. The index storage area 210 stores index information 300, and the data storage area 220 stores storage data 400. The index storage area 210 includes at least two storage layers, specifically including a first storage layer 211 and a second storage layer 212. The index information 300 in the index storage area 210 is stored in a layered manner and segments according to the sequence of writing time. Index data in the memory 100 is stored in a B-tree structure or a skip list structure, and index data in the index storage area 210 is stored in accordance with a learning index method.

For a learning index, the learning index performs machine learning on the index information 300 based on data distribution laws. To find specified keyword information, the learning index uses a cumulative distribution function (CDF) that predicts a location of keyword information to determine the location of the keyword information. That is, the learning index learns a mapping function based on a location distribution of the keyword information, inputs the keyword information to a learning index model 310, and obtains the location of the keyword information through the mapping function, and the location of the keyword information is output by the learning index model 310.

An embodiment of the present application provides a data storage method, and the data storage method is applied to the database system described above. The database system stores the storage data 400 written to the data storage area 220 of the disk 200 of the database system by means of the data storage method.

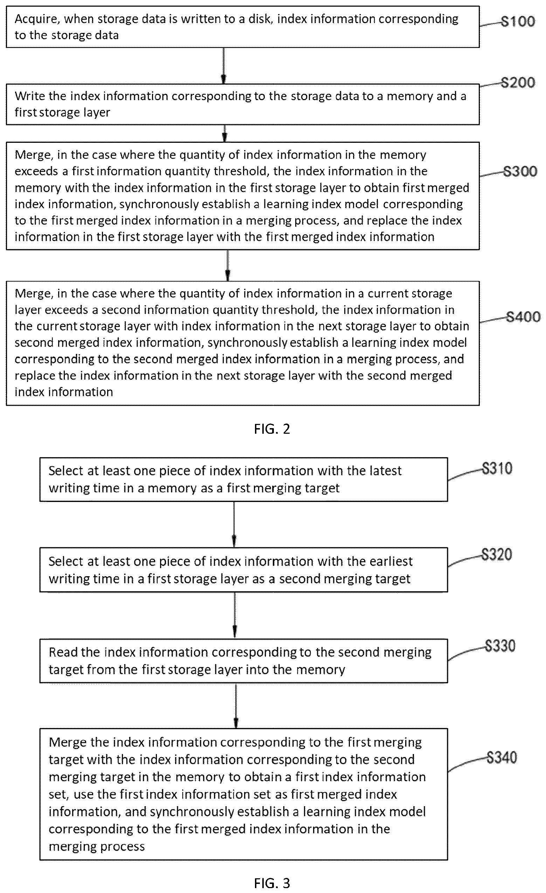

Referring to FIG. 2, FIG. 2 is a flow diagram of the data storage method. The data storage method includes, but not limited to, the following steps S100-S400.

In step S100, when storage data is written into a disk, index information corresponding to the storage data is acquired.

In step S200, the index information is written into a memory and a first storage layer.

In step S300, in the case where the quantity of the index information in the memory exceeds a first information quantity threshold, the index information in the memory and the index information in the first storage layer are merged to obtain first merged index information, a learning index model corresponding to the first merged index information is synchronously established in the merging process, and the index information in the first storage layer is replaced with the first merged index information.

Step S400, in the case where the quantity of index information in a current storage layer exceeds a second information quantity threshold, the index information in the current storage layer and index information in the next storage layer are merged to obtain second merged index information, a learning index model corresponding to the second merged index information is synchronously established in the merging process, and the index information in the next storage layer is replaced with the second merged index information.

For step S100, referring to FIG. 1, when a user inputs the storage data 400 to the database system, the storage data 400 is written to the data storage area 220 of the disk 200 by the database system, and the index information 300 corresponding to the written storage data 400 is acquired. Specifically, the index information 300 is represented in a form of a key-value pair, and the key-value pair is formed by the keyword information of the storage data 400 and the location information of the storage data 400, that is, the keyword information of the storage data 400 is a key of the key-value pair, and the location information of the storage data 400 is a value of the key-value pair. For example, the storage data 400 with the value of 26 is written to a storage location 4 of the data storage area 220 of the disk 200, the keyword information of the storage data 400 with the value of 26 is 26, the location information of the storage data 400 with the value of 26 is 4, and the key-value pair (26, 4) is formed by the keyword information and the location information, that is, the index information 300 corresponding to the storage data 400 with the value of 26 may be obtained as (26, 4). Of course, in other embodiments, the index information 300 may also be represented in other ways, such as a hash table structure, according to actual needs.

For step S200, the index information 300 is written into the memory 100 and the first storage layer 211 while the storage data 400 is written into the data storage area 220 of the disk 200. The first storage layer 211 is a storage layer storing a plurality of pieces of index information 300 with the earliest writing time.

For example, the key-value pair (26, 4) is used as hot data to be written to a buffer of the memory 100 and is inserted into a B-tree structure storing the index information 300. Synchronously, persistence operation is performed on the key-value pair (26, 4), and the key-value pair (26, 4) is written to the index storage area 210 of the disk 200. The index information 300 of the index storage area 210 is stored in a layered manner and segments in an ordered manner according to the sequence of the writing time. Thus, the key-value pair (26, 4) just written is stored in the first storage layer 211 and may form a data segment with other index information 300. The index information 300 inserted into the memory 100 is not required to be stored in an ordered manner, which is friendly to the insertion of index data.

The B-tree is a self-balancing tree that keeps keys and values ordered for sequential traversal; layered indexes are used to minimize reading of the disk 200; incompletely filled blocks are used to speed up insertions and deletions; and indexes are kept balanced by traversal algorithms. The B-tree structure enables actions of data finding, sequential access, data inserting, and deleting to be completed within logarithmic time. Space waste is minimized by the B-tree by ensuring that internal nodes are at least half full.

For step S300, when the index information 300 is written to the memory 100, a plurality of pieces of index data have been stored in the memory 100; and in the case where the quantity of the index information 300 in the memory 100 exceeds a first information quantity threshold, data merging operation is performed on the index information 300. The first information quantity threshold may be set according to specific practical situations, for example, when the quantity of the index information 300 in the memory 100 exceeds one tenth of the capacity of the first storage layer 211, the data merging operation needs to be performed on the index information 300.

For merging of the index information 300 in the memory 100 with the index information 300 in the first storage layer 211, the learning index model 310 is required to be established synchronously in the merging process. The learning index model 310 corresponds to the first merged index information obtained by merging the index information 300 in the memory 100 with the index information 300 in the first storage layer 211.

Referring to FIG. 3, specifically, merging the index information 300 in the memory 100 with the index information 300 in the first storage layer 211 to obtain the first merged index information, and synchronously establishing the learning index model 310 corresponding to the first merged index information in the merging process include, but not limited to, the following steps S310-S340.

In step S310, at least one piece of index information with the latest writing time in the memory is selected as a first merging target.

In step S320, at least one piece of index information with the earliest writing time in the first storage layer is selected as a second merging target.

In step S330, the index information corresponding to the second merging target is read from the first storage layer into the memory.

In step S340, the index information corresponding to the first merging target is merged with the index information corresponding to the second merging target in the memory to obtain a first index information set, the first index information set is used as the first merged index information, and the learning index model corresponding to the first merged index information is established synchronously in the merging process.

For step S310, in the memory 100, the index information 300 is stored in the B-tree structure, and when the index information 300 in the memory 100 is extracted for merging, the writing time of all the index information 300 in the memory 100 is counted to obtain writing time information; all the index information 300 in the memory 100 is sorted according to the writing time information from late to early, and the index information 300 ranked before the preset ranking is selected as the first index information set. Alternatively, all the index information 300 in the memory 100 is sorted according to the writing time information from early to late, and the index information 300 ranked after the preset ranking is selected as the first index information set. That is, at least one piece of index information 300 with the latest writing time in the memory 100 may be obtained as the first merging target.

For step S320, in the first storage layer 211, the first storage layer 211 includes at least one first data segment, and the first data segment includes at least one piece of index information 300; and a data segment with the earliest writing time in the first storage layer 211 is selected as the second merging target.

For step S330, the memory 100 stores first segment range information of the first data segment, and the first segment range information is stored in the B-tree structure, which facilitates rapid lookup and locating of the first data segment by the memory 100 based on the first segment range information. The index information 300 corresponding to the second merging target is read from the first storage layer 211 into the memory 100. Specifically, first target segment range information of the second merging target is determined based on the first segment range information, and the first data segment corresponding to the second merging target is read from the first storage layer 211 into the memory 100 based on the first target segment range information.

For step S340, the index information 300 corresponding to the first merging target is merged with the index information 300 corresponding to the second merging target in the memory 100 to obtain the first index information set, and the first index information set is used as the first merged index information. Specifically, since the index information 300 in the first storage layer 211 is stored in segments, a data segment of the first storage layer 211 is read into the memory 100, i.e., the index information 300 corresponding to the first merging target is merged with the data segment corresponding to the second merging target in the memory 100 to obtain the first index information set.

Synchronously, the learning index model 310 corresponding to the first merged index information is established in the merging process.

Since merging the index information 300 and simultaneously establishing the learning index model 310 are required only when the quantity of the index information 300 in the memory 100 exceeds the first information quantity threshold, instead of merging the index information 300 and simultaneously establishing the learning index model 310 every time the index information 300 is written, there is no need for the model to learn index information 300 that has just been written, nor is there a need to update the model, which thus is friendly to the insertion of the index information 300.

In addition, since the index information 300 included in each data segment is a very small part of the database system, this is very low time cost for the learning index model 310 to perform learning. Moreover, the merging process occurs in the memory 100, and the learning index model 310 performs learning synchronously while the index information 300 is merged, so the overhead for the learning index model 310 to perform learning is very small. In this way, both fast training, i.e., learning, and reasoning, i.e., lookup, may be conducted, and the space overhead is very small.

In addition, the index information 300 includes both keyword information of stored information and location information of the stored information, and indexes ensure the validity of the learning index even in the case of disordered raw data.

Then, the index information 300 in the first storage layer 211 is replaced with the first merged index information. Specifically, the first merged index information in the memory 100 is persisted to the disk 200 to overwrite the index information 300 in the first storage layer 211. The index information 300 in the first storage layer 211 is stored in segments; and an original data segment read into the memory 100 in the first storage layer 211 is overwritten by the first merged index information, and the first segment range information of the memory 100 is updated based on a segment result after overwriting.

For step S400, after the index information 300 in the first storage layer 211 is replaced with the first merged index information, if the quantity of the index information 300 in the first storage layer 211 exceeds the second information quantity threshold, the index information 300 of the first storage layer 211 is required to be merged with the index information 300 of the next second storage layer 212 corresponding to the first storage layer 211. The second information quantity threshold corresponding to the first storage layer 211 may be set according to specific practical situations. For example, when the quantity of the index information 300 in the first storage layer 211 exceeds one tenth of the capacity of the next second storage layer 212 corresponding to the first storage layer 211, the data merging operation needs to be performed on the index information 300.

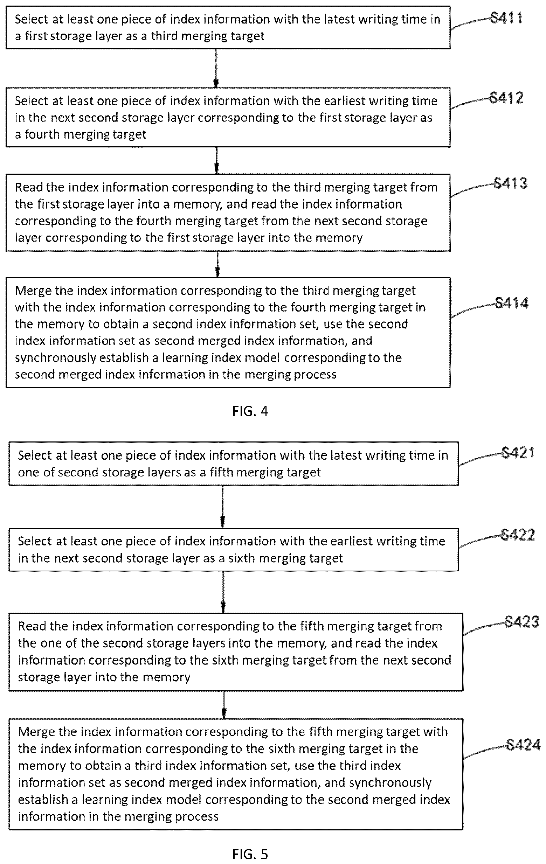

Referring to FIG. 4, specifically, merging the index information 300 in the first storage layer 211 with the index information 300 in the next second storage layer 212 corresponding to the first storage layer 211 includes, but not limited to, the following steps S411-S414.

In step S411, at least one piece of index information with the latest writing time in the first storage layer is selected as a third merging target.

In step S412, at least one piece of index information with the earliest writing time in the next second storage layer corresponding to the first storage layer is selected as a fourth merging target.

In step S413, the index information corresponding to the third merging target is read from the first storage layer into the memory, and the index information corresponding to the fourth merging target is read from the next second storage layer corresponding to the first storage layer into the memory.

In step S414, the index information corresponding to the third merging target is merged with the index information corresponding to the fourth merging target in the memory to obtain a second index information set, the second index information set is used as the second merged index information, and a learning index model corresponding to the second merged index information is established synchronously in the merging process.

In addition, the second storage layer 212 includes at least one second data segment, and the second data segment includes at least one piece of index information 300. The memory 100 stores second segment range information of the second data segment. The index information 300 corresponding to the third merging target is read from the first storage layer 211 into the memory 100, and the index information 300 corresponding to the fourth merging target is read from the next second storage layer 212 corresponding to the first storage layer 211 into the memory 100. Specifically, second target segment range information of the third merging target is determined based on the first segment range information, and third target segment range information of the fourth merging target is determined based on the second segment range information, the second data segment corresponding to the third merging target is read from the first storage layer 211 into the memory 100 based on the second target segment range information, and a second data segment corresponding to the fourth merging target is read from the next second storage layer 212 corresponding to the first storage layer 211 into the memory 100 based on the third target segment range information.

Since the index information 300 in the first storage layer 211 and the index information 300 of the second storage layer 212 are ordered, the merging of the index information 300 of the first storage layer 211 and the index information 300 of the second storage layer 212 is fast.

Similarly, for each second storage layer 212, after the index information 300 in the second storage layer 212 is replaced with the merged index information 300, if the quantity of the index information 300 of the second storage layer 212 exceeds the second information quantity threshold, the index information 300 of the second storage layer 212 is required to be merged with the index information 300 of the next second storage layer 212 corresponding to the second storage layer 212. The second information quantity threshold corresponding to the second storage layer 212 may be set according to specific practical situations. For example, when the quantity of the index information 300 in the second storage layer 212 exceeds one tenth of the capacity of the next second storage layer 212 corresponding to the first storage layer 211, the data merging operation is required to be performed on the index information 300.

In addition, the second information quantity threshold corresponding to the second storage layer 212 may be set as a value different from the second information quantity threshold corresponding to the first storage layer 211. The second information quantity thresholds corresponding to the second storage layers 212 may also be set as different values.

Referring to FIG. 5, specifically, merging the index information 300 in one of the second storage layers 212 with the index information 300 in the next second storage layer 212 corresponding to the second storage layer 212 includes, but not limited to, the following steps S421-S424.

In step S421, at least one piece of index information with the latest writing time in one of the second storage layers is selected as a fifth merging target.

In step S422, at least one piece of index information with the earliest writing time in the next second storage layer is selected as a sixth merging target.

In step S423, the index information corresponding to the fifth merging target is read from the one of the second storage layers into the memory, and the index information corresponding to the sixth merging target is read from the next second storage layer into the memory.

In step S424, the index information corresponding to the fifth merging target is merged with the index information corresponding to the sixth merging target in the memory to obtain a third index information set, the third index information set is used as the second merged index information, and a learning index model corresponding to the second merged index information is established synchronously in the merging process.

In addition, the second storage layer 212 includes at least one second data segment, and the second data segment includes at least one piece of index information 300. Second segment range information of the second data segment is stored in the memory 100. The index information 300 corresponding to the fifth merging target is read from one of the second storage layers 212 into the memory 100, and the index information 300 corresponding to the sixth merging target is read from the next second storage layer 212 into the memory 100. Specifically, fourth target segment range information of the fifth merging target and fifth target segment range information of the sixth merging target are determined based on the second segment range information, the second data segment corresponding to the fifth merging target is read from one of the second storage layers 212 into the memory 100 based on the fourth target segment range information, and the second data segment corresponding to the sixth merging target is read from the next second storage layer 212 into the memory 100 based on the fifth target segment range information.

Since the index information 300 of the second storage layers 212 is ordered, the merging of the index information 300 of two second storage layers 212 is fast.

Each time the index information 300 is merged, the index information 300, which is stored in a layered manner and segments in an orderly manner, is learned to establish the learning index model 310 for lookup, so that the location of the keyword information may be quickly predicted by the learning index model 310 based on the keyword information. With layered segmented learning, files of the index information 300 of the first storage layer 211 and the second storage layer 212 are not modified in place once they are created, so the learning index model 310 is established on top of the steady state files, and the learning index model 310 does not change due to the insertion of the index information 300.

An embodiment of the present application provides a data reading method, applied to the database system described above. The database system reads storage data 400 written to a data storage area 220 of a disk 200 of the database system by means of the data reading method.

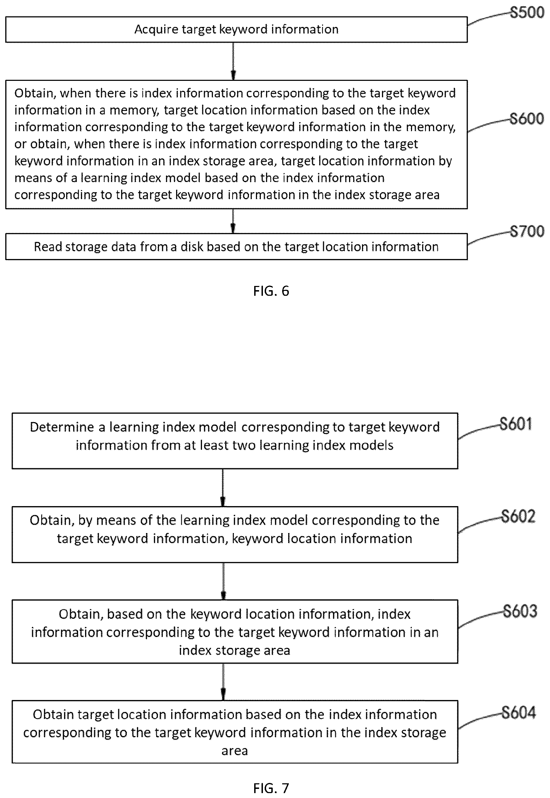

Referring to FIG. 6, FIG. 6 is a flow diagram of a data reading method. The data reading method includes, but not limited to, the following steps S500-S700.

In step S500, target keyword information is acquired.

In step S600, when there is index information corresponding to the target keyword information in a memory, target location information is obtained based on the index information corresponding to the target keyword information in the memory, or when there is index information corresponding to the target keyword information in an index storage area, target location information is obtained according to the index information corresponding to the target keyword information in the index storage area by means of a learning index model, the target location information being location information of storage data to be read.

In step S700, storage data is read from a disk based on the target location information.

By means of the above data reading method, the data reading efficiency can be improved, and the data reading overhead can be reduced.

For step S500, the target keyword information is keyword information of the storage data 400 to be read. For example, to read the storage data 400 with a value of 26, the keyword information 26 corresponding to the storage data 400 with the value of 26 may be read first.

For step S600, the index information 300 corresponding to the target keyword information is first searched for from the memory 100 based on the target keyword information, and when the index information 300 corresponding to the target keyword information exists in the memory 100, and index data in the memory 100 is stored in a B-tree structure or a skip list structure, the index information 300 corresponding to the target keyword information is directly read from the memory 100, so that the location information of the storage data 400 to be read, i.e., the target location information, is obtained.

When the index information 300 corresponding to the target keyword information does not exist in the memory 100, the index information 300 corresponding to the target keyword information is stored in the index storage area 210 of the disk 200, and the target location information is obtained by means of the learning index model 310 based on the index information 300 corresponding to the target keyword information in the index storage area 210.

Referring to FIG. 7, specifically, obtaining the target location information by means of the learning index model 310 based on the index information 300 corresponding to the target keyword information in the index storage area 210 includes steps S601-S604.

In step S601, a learning index model corresponding to the target keyword information is determined from at least two learning index models.

In step S602, keyword location information is obtained by means of the learning index model corresponding to the target keyword information, the keyword location information indicating a location of the target keyword information in the index storage area.

In step S603, the index information corresponding to the target keyword information in the index storage area is obtained based on the keyword location information.

In step S604, the target location information is obtained based on the index information corresponding to the target keyword information in the index storage area.

The time complexity overhead of the index information 300 is read out to be O(LogN) based on the B-tree structure, and the time complexity overhead of the index information 300 is read out to be O(1) based on the learning index model 310, where N denotes the quantity of the index information 300.

For step S700, the database system reads the storage data 400 corresponding to the target keyword information from the disk 200 based on the target location information. For example, if the target location information corresponding to the keyword information 26 is obtained as 4 in step S600, storage data 400 with a value of 26 is read from the location 4 of the disk 200 based on the target location information 4.

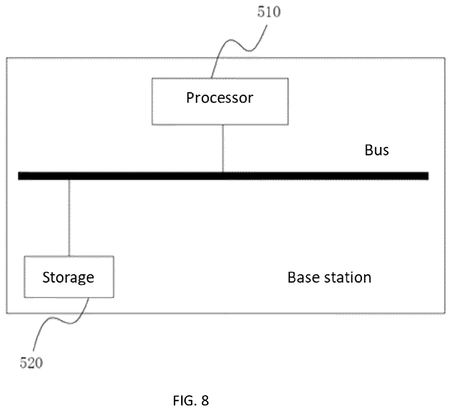

An embodiment of the present application further provides an electronic device. Referring to FIG. 8, FIG. 8 is a structural diagram of an electronic device. The electronic device includes: one or more processors 510 and a storage 520. The processors 510 and the storage 520 may be connected via a bus or otherwise.

The storage 520 serves as a non-transitory computer-readable storage medium that may be configured to store non-transitory software programs as well as non-transitory computer-executable programs, such as the data storage method or the data reading method according to the above-described embodiments of the present application. The processor 510 implements the data storage method or the data reading method according to the above-described embodiments of the present application by running the non-transitory software program and the non-transitory computer-executable programs stored in the memory 520.

The storage 520 may include a program area and a data area. Application programs required by an operating system and at least one function may be stored in the program area. Data, etc., required for performing the data storage method or the data reading method according to the above-described embodiments of the present application may be stored in the data area. In addition, the storage 520 may include a high-speed random access storage 520, and may also include a non-transitory storage 520, such as at least one disk storage device, a flash storage device, or other non-transitory solid state storage devices. In some implementations, the storage 520 may optionally include storages 520 that are remotely set relative to the processor 510, and these remote storages 520 may be connected to a terminal via networks. Examples of the networks include, but not limited to, the Internet, corporate intranets, local area networks, mobile communication networks, and combinations thereof.

The non-transitory software programs and the non-transitory computer-executable programs required to implement the data storage method or the data reading method according to the above-described embodiments of the present application are stored in the storage 520, and implement, when executed by the one or more processors 510, the data storage method or the data reading method according to the above-described embodiments of the present application, e.g., executing the above-described steps S100 to S400 in FIG. 2, steps S310 to S340 in FIG. 3, steps S411 to S414 in FIG. 3, step S421 to S424 in FIG. 4, steps S431 to S434 in FIG. 5, steps S500 to S700 in FIG. 6, and steps S601 to S604 in FIG. 7.

The embodiments described above are merely schematic, where units illustrated as separated components may or may not be physically separated, i.e., they may be located in one place or they may also be distributed over a plurality of network units. Some or all of modules may be selected according to actual needs to achieve the purpose of the solutions of this embodiment.

In addition, an embodiment of the present application further provides a computer-readable storage medium storing computer-executable instructions. The computer-executable instructions, when executed by a processor or a controller, e.g., by a processor, may cause the processor to execute the data storage method or the data reading method according to the above-described embodiments. For example, steps S100 to S400 in FIG. 2, steps S310 to S340 in FIG. 3, steps S411 to S414 in FIG. 3, steps S421 to S424 in FIG. 4, steps S431 to S434 in FIG. 5, steps S500 to S700 in FIG. 6, and steps S601 to S604 in FIG. 7 described above are executed.

The embodiment of the present application includes: when storage data is written to a disk, index information corresponding to the storage data is acquired; the index information is written to a memory and the disk, the disk storing the index information in a layered manner according to the sequence of writing time; in the case where the quantity of index information in the memory exceeds a first information quantity threshold, the index information in the memory is merged with index information in a first storage layer of an index storage area of the disk to obtain first merged index information, a learning index model corresponding to the first merged index information is established synchronously in a merging process, and the index information in the first storage layer is replaced with the first merged index information; and in the case where the quantity of index information in a current storage layer exceeds a second information quantity threshold, the index information in the current storage layer is merged with index information in the next storage layer to obtain second merged index information, a learning index model corresponding to the second merged index information is established synchronously in a merging process, and the index information in the next storage layer is replaced with the second merged index information. By storing the index data in ordered layers according to the degree of hot and cold of the data and establishing the learning index model while the index data is merged, the problems that a database system adopting a learning index requires index information to be ordered and is not friendly to the insertion of index information are effectively solved.

It will be understood by a person of ordinary skill in the art that all or some of the steps in the method disclosed above and systems may be implemented as software, firmware, hardware, and suitable combinations thereof. Some or all of physical assemblies may be implemented as software executed by a processor, such as a central processor, a digital signal processor, or a microprocessor, or as hardware, or as integrated circuits, such as application-specific integrated circuits. Such software may be distributed on a computer-readable medium, and the computer-readable medium may include a computer storage medium (or non-transitory medium) and a communication medium (or transitory medium). As is well known to those of ordinary skill in the art, the term "computer storage medium" includes volatile and non-volatile, removable and non-removable media implemented in any method or technique for storing information (such as computer-readable instructions, data structures, program modules, or other data). The computer storage media include, but not limited to, an RAM, an ROM, an EEPROM, a flash memory or other memory technology, a CD-ROM, a digital versatile disk (DVD) or other optical disk storages, magnetic cartridges, magnetic tapes, magnetic disk storages, or other magnetic storage devices, or any other media that can be used to store desired information and that can be accessed by a computer. In addition, it is well known to those of ordinary skill in the art that the communication media typically contain computer-readable instructions, data structures, program modules, or other data in a modulated data signal such as a carrier wave or other transmission mechanisms, and may include any information delivery medium.

## Claims

1. A data storage method, applied to a database system, the database system comprises a memory and a disk, the disk comprises an index storage area, the index storage area stores index information, the index storage area comprises at least two storage layers, and the index information in the index storage area is stored in a layered manner according to a sequence of writing time; and
the data storage method comprises:
acquiring, upon the condition that storage data is written into the disk, index information corresponding to the storage data;
writing the index information corresponding to the storage data into the memory and a first storage layer, the first storage layer being a storage layer storing index information with earliest writing time;
merging, in the case where a quantity of index information in the memory exceeds a first information quantity threshold, the index information in the memory with the index information in the first storage layer to obtain first merged index information, synchronously establishing a learning index model corresponding to the first merged index information in a merging process, and replacing the index information in the first storage layer with the first merged index information; and
merging, in the case where a quantity of index information in a current storage layer exceeds a second information quantity threshold, the index information in the current storage layer with index information in a next storage layer to obtain second merged index information, synchronously establishing a learning index model corresponding to the second merged index information in a merging process, and replacing the index information in the next storage layer with the second merged index information.

2. The data storage method according to claim 1, wherein merging the index information in the memory with the index information in the first storage layer to obtain the first merged index information, and synchronously establishing the learning index model corresponding to the first merged index information in the merging process comprises:
selecting at least one piece of index information with latest writing time in the memory as a first merging target;
selecting at least one piece of index information with earliest writing time in the first storage layer as a second merging target;
reading index information corresponding to the second merging target from the first storage layer into the memory; and
merging index information corresponding to the first merging target with the index information corresponding to the second merging target in the memory to obtain a first index information set, using the first index information set as the first merged index information, and synchronously establishing the learning index model corresponding to the first merged index information in the merging process.

3. The data storage method according to claim 2, wherein the first storage layer comprises at least one first data segment, and the first data segment comprises at least one piece of index information; the memory stores first segment range information of the first data segment; and
reading the index information corresponding to the second merging target from the first storage layer into the memory comprises:
determining, based on the first segment range information, first target segment range information of the second merging target, and reading, based on the first target segment range information, the first data segment corresponding to the second merging target from the first storage layer into the memory.

4. The data storage method according to claim 2, wherein the index information in the memory is stored in a tree structure; and selecting at least one piece of index information with the latest writing time in the memory as the first merging target comprises:
counting writing time of all index information in the memory to obtain writing time information; and
sorting all the index information in the memory according to the writing time information from late to early, and selecting index information ranked before a preset ranking as the first merging target.

5. The data storage method according to claim 3, wherein the index storage area further comprises at least one second storage layer; writing time of index information of the second storage layer is later than writing time of the index information of the first storage layer; and upon the condition that the current storage layer is the first storage layer, merging the index information in the current storage layer with the index information in the next storage layer to obtain the second merged index information, and synchronously establishing the learning index model corresponding to the second merged index information comprises:
selecting at least one piece of index information with latest writing time in the first storage layer as a third merging target;
selecting at least one piece of index information with earliest writing time in a next second storage layer corresponding to the first storage layer as a fourth merging target;
reading index information corresponding to the third merging target from the first storage layer into the memory, and reading index information corresponding to the fourth merging target from the next second storage layer corresponding to the first storage layer into the memory; and
merging the index information corresponding to the third merging target with the index information corresponding to the fourth merging target in the memory to obtain a second index information set, using the second index information set as the second merged index information, and synchronously establishing the learning index model corresponding to the second merged index information in the merging process.

6. The data storage method according to claim 5, wherein upon the condition that the current storage layer is one of second storage layers, the next storage layer is a next second storage layer corresponding to the one of the second storage layers; and merging the index information in the current storage layer with the index information in the next storage layer to obtain the second merged index information, and synchronously establishing the learning index model corresponding to the second merged index information comprises:
selecting at least one piece of index information with latest writing time in one of the second storage layers as a fifth merging target;
selecting at least one piece of index information with earliest writing time in the next second storage layer as a sixth merging target;
reading the index information corresponding to the fifth merging target from one of the second storage layers into the memory, and reading the index information corresponding to the sixth merging target from the next second storage layer into the memory; and
merging the index information corresponding to the fifth merging target with the index information corresponding to the sixth merging target in the memory to obtain a third index information set, using the third index information set as the second merged index information, and synchronously establishing the learning index model corresponding to the second merged index information in the merging process.

7. The data storage method according to claim 6, wherein the second storage layer comprises at least one second data segment, and the second data segment comprises at least one piece of index information; the memory stores second segment range information of the second data segment;
reading the index information corresponding to the third merging target from the first storage layer into the memory, and reading the index information corresponding to the fourth merging target from the next second storage layer corresponding to the first storage layer into the memory, comprises:
determining, based on the first segment range information, second target segment range information of the third merging target, determining, based on the second segment range information, third target segment range information of the fourth merging target, reading, based on the second target segment range information, a second data segment corresponding to the third merging target from the first storage layer into the memory, and reading, based on the third target segment range information, a second data segment corresponding to the fourth merging target from the next second storage layer corresponding to the first storage layer into the memory; and
reading the index information corresponding to the fifth merging target from the one of the second storage layers into the memory, and reading the index information corresponding to the sixth merging target from the next second storage layer into the memory comprises:
determining, based on the second segment range information, fourth target segment range information of the fifth merging target and fifth target segment range information of the sixth merging target, reading, based on the fourth target segment range information, the second data segment corresponding to the fifth merging target from the one of the second storage layers into the memory, and reading, based on the fifth target segment range information, the second data segment corresponding to the sixth merging target from the next second storage layer into the memory.

8. A data reading method, applied to a database system, the database system comprises a memory and a disk, the disk comprises an index storage area, the memory and the index storage area store index information, the index information comprises keyword information of storage data and location information of the storage data, the index storage area comprises at least two storage layers, and the index information in the index storage area is stored in a layered manner according to a sequence of writing time; a database stores the storage data in accordance with the data storage method according to any one of claims 1 to 7; and
the data reading method comprises:
acquiring target keyword information, the target keyword information being keyword information of storage data to be read;
obtaining, upon the condition that there is index information corresponding to the target keyword information in the memory, target location information based on the index information corresponding to the target keyword information in the memory, or obtaining, upon the condition that there is index information corresponding to the target keyword information in the index storage area, target location information by means of a learning index model based on the index information corresponding to the target keyword information in the index storage area, the target location information being location information of the storage data to be read; and
reading the storage data from the disk based on the target location information.

9. The data reading method according to claim 8, wherein obtaining the target location information by means of the learning index model based on the index information corresponding to the target keyword information in the index storage area comprises:
determining a learning index model corresponding to the target keyword information from at least two learning index models; and
obtaining, by means of the learning index model corresponding to the target keyword information, keyword location information, the keyword location information indicating a location of the target keyword information in the index storage area;
obtaining, based on the keyword location information, index information corresponding to the target keyword information in the index storage area; and
obtaining the target location information based on the index information corresponding to the target keyword information in the index storage area.

10. A database system, comprising a memory and a disk, wherein the disk comprises an index storage area, the index storage area stores index information, the index storage area comprises at least two storage layers, and the index information in the index storage area is stored in a layered manner according to a sequence of writing time; a database stores storage data in accordance with the data storage method according to any one of claims 1 to 7; and the database reads storage data in accordance with the data reading method according to any one of claims 8 to 9.

11. An electronic device, comprising: a storage, a processor and a computer program stored on the storage and able to run on the processor, wherein the processor, when executing the computer program, implements the data storage method according to any one of claims 1 to 7 or the data reading method according to any one of claims 8 to 9.

12. A computer-readable storage medium, storing computer-executable instructions, wherein the computer-executable instructions are used to execute the data storage method according to any one of claims 1 to 7 or the data reading method according to any one of claims 8 to 9.
